Europäisches Patentamt

European Patent Office

Office européen des brevets

(19)

(11) **EP 1 477 766 A1**

(12) **EUROPEAN PATENT APPLICATION**

(43) Date of publication:
**17.11.2004 Bulletin 2004/47**

(51) Int Cl.⁷: **G01B 11/275**

(21) Application number: **04425325.0**

(22) Date of filing: **07.05.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Boni, Fabio**<br>**50030 Ronta, Borgo S. Lorenzo, Firenza (IT)** |
| (30) Priority: **15.05.2003 IT FI20030138** | (74) Representative: **Mannucci, Michele et al**<br>**Ufficio Tecnico Ing.A. Mannucci S.R.L,**<br>**Via della Scala 4**<br>**50123 Firenze (IT)** |
| (71) Applicant: **Boni, Fabio**<br>**50030 Ronta, Borgo S. Lorenzo, Firenza (IT)** | |

(54) **Device for measuring the differences in track between the front wheels and the rear wheels of vehicles**

(57)    A bar (15) to be placed at a limited distance in front of the vehicle is equipped with two optical receivers (17s, 17d) placed with a distance between them limitedly greater than the tracks of the vehicle and facing the right wheels and the left wheels respectively, with their optical axes orthogonal to the bar or in any case aligned along a known direction towards the vehicle; point light sources (21) are preset on each wheel and visible from said receivers (17s; 17d); the receivers are suitable to measure the angle according to which the point images reach the receivers.

Fig. 2

**Description**

For operations to control the geometry, that is the alignment of the wheels of a motor vehicle, preliminary measurement of the difference between the track of the front wheels and the track of the rear wheels, or also other data of the vehicle, such as the actual tracks, is required.

Devices currently in use are complicated, somewhat imprecise and require relatively laborious manual operations.

These and other drawbacks are eliminated with the device according to the invention, as shall be seen in the text hereunder.

Essentially, the device in question comprises: a bar to be positioned at a limited distance in front of the vehicle and equipped with two optical receivers placed with a distance between them limitedly greater than the tracks of the vehicle and facing the right wheels and the left wheels respectively, both with their optical axis perpendicular to the bar or positioned in a know way towards the wheels of the vehicle; and point light sources are positionable on each wheel and visible from said receivers. Each receiver is suitable to measure the angle according to which the point images reach the receiver, which is sufficient for calculation, using further known factors.

Each receiver comprises an optical focusing system and an optical system with cylindrical lens to linearly concentrate the image of the point light sources on the photosensitive range of the receiver. The optical data are switched into electrical data and utilized for calculation.

In addition to the difference between the tracks of a vehicle, the two tracks and/or the misalignment may be also calculated.

The point light sources are in practice placed on the wheels at a fixed and known distance therefrom.

Said point light sources may advantageously be concentrated in the infrared range or in another range, and a corresponding selector filter is provided in the optical receivers.

The point light sources can be produced with LEDs, which can be part of assemblies applied to the wheels to perform successive operations relative to checking toe-in.

The invention will be better understood by following the description and accompanying drawing, which shows a non-limiting example of the invention. In the drawing:

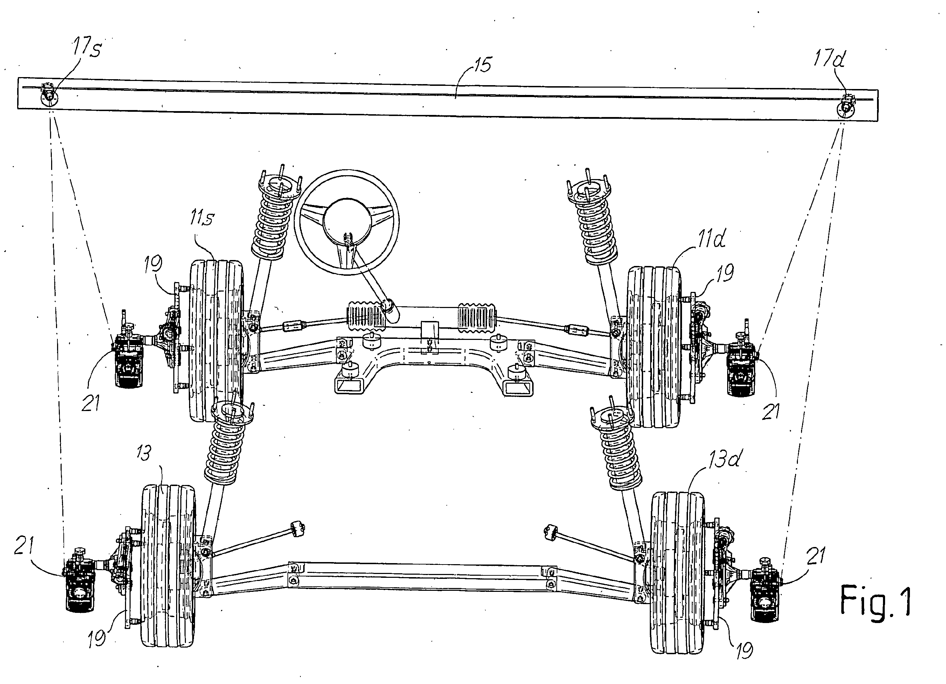

Figure 1 shows a perspective diagram of the front and rear wheels of the device;

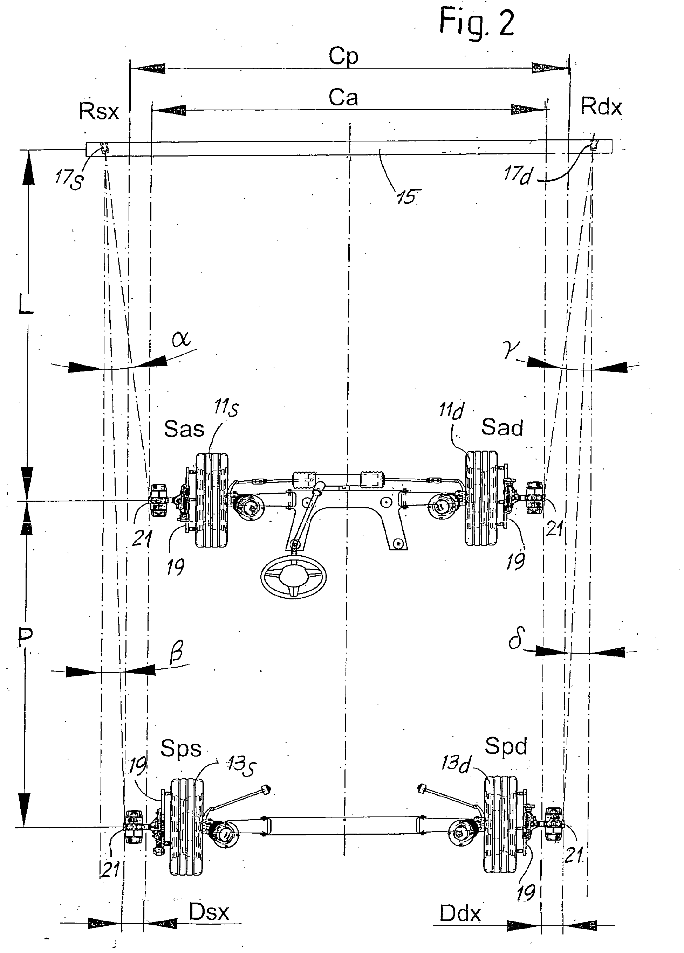

Figure 2 is a plan view of the assembly in Figure 1;
Figures 3, 4 and 5 show an optical receiver in a perspective view, in the side view and in a sectional view according to V-V in Figure 4 completed with the functional optical diagram thereof; and
Figure 6 is the graphical diagram to illustrate the mathematical calculation of the required values.

In the drawing 11d and 11s indicate the front right and left wheels and 13d and 13s the rear right and left wheels of a vehicle to undergo measurement of the difference between the two tracks. The wheelbase between the front and rear wheels is indicated with P.

In front of the vehicle, a bar 15 is placed at a distance L from the axle of the front wheels 11, which in the case of work in the pit, can be positioned at a height more or less equal to the radius of the wheels or, alternatively, is positioned at the working height on the vehicle lift increased by more or less the radius of the wheels. Two PSD optical receivers, indicated generically with 17d and 17s, are placed towards the ends of the bar 15, spaced apart by a distance greater than the width of the vehicle. These receivers may be positioned with the axis orthogonal to the bar or positioned towards the wheels to be examined by a know value, to be entered in the calculations.

The device can make use of the assemblies indicated with 19, which are applied to the wheels for the operations to check and adjust toe-in. Light sources, that is sensors, are applied to these assemblies for the purposes indicated hereunder; each of these sources indicated with 21 can be constituted by a LED suitable to produce a light lobe in the infrared range or in another specific range. These sensors or LEDs 21 are at a known distance from the receivers 17 of the bar 15, said distance being equal respectively to L and L+P for the front and rear sensors 21; each source 21 is at a fixed and known distance from the respective wheel 11 or 13.

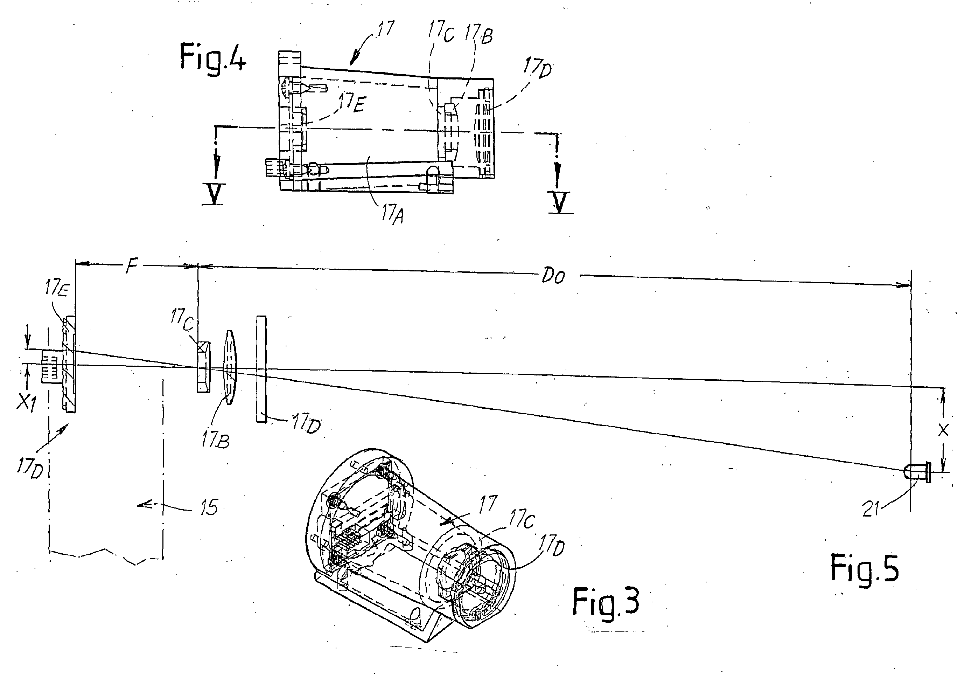

Each of the optical receivers 17 comprises a container 17A made of plastic or another material, contained inside which is a battery of lenses including a spherical lens 17B and a cylindrical lens 17C and a filter 17D that allows only the infrared light emitted by the LEDs 21 to pass through. The real PSD receiver or transducer suitable to transform the optical signal received on its sensitive surface into an electrical signal is indicated with 17E; this transducer is located at a distance F from the bottom of the cylindrical lens 17C; Do indicates - in the diagram in Figure 5 - the distance between the bottom of the cylindrical lens 17C and the light source 21 to be examined each time, the image of which is concentrated on the PSD sensor or transducer 17E being concentrated according to a line by the cylindrical lens 17C, to obtain a clear and concentrated signal in the photosensitive measurement scale of the PSD sensor or transducer 17E, solely with the infrared light coming from the active LED 21 and purified by the filter 17D. The distance X1 which is provided by the transducer 17E is directly proportional to the distance X between the light source 21, which produced it, and the perpendicular to the axis of the bar 15 passing through the corresponding receiver 17.

With this structure, by selectively activating the four light sources 21 the four angular readings $\alpha$, $\beta$, $\gamma$, $\delta$ are obtained to allow exact calculation of the differences in track between the tracks Cp and Ca, as the measurements of the linear dimensions, that is the values L, P, Do, are known, while those of the angles can be obtained with the aforesaid four readings.

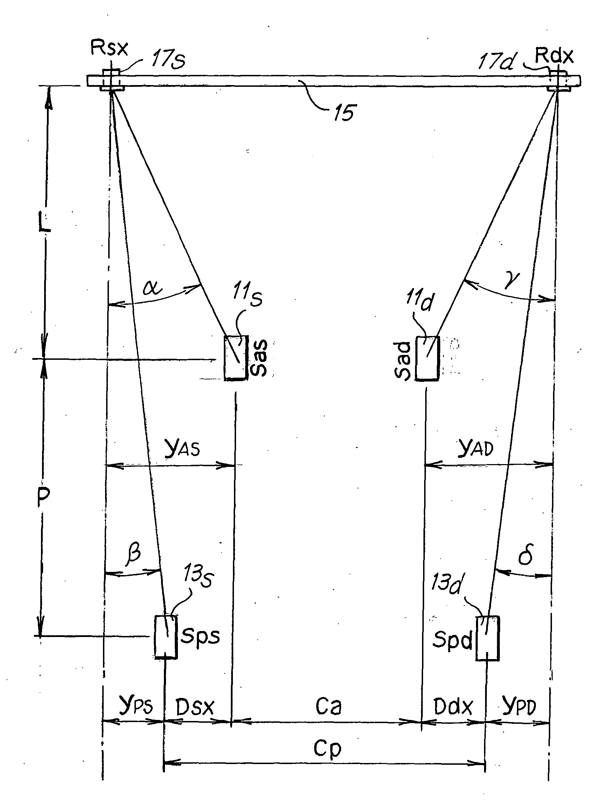

To perform the calculation, with reference in particular to Figure 6 and to the left side of the vehicle, as Rsx origin of the Cartesian plane the position of the optical receiver 17S is considered; analogously, considering the right side of the vehicle, as Rdx the position of the receiver 17d is considered; moreover, the ordinate axis is considered in the direction of the bar 15 and the abscissa axis in a direction perpendicular to the bar. The coordinates of the sensors are indicated as follows:

| | |
|---|---|
| Sas = $(x_{AS}, y_{AS})$ | the coordinates of the Front Left sensor Sas, that is of the light point 11 s |
| Sad = $(X_{AD}, Y_{AD})$ | the coordinates of the Front Right Sensor Sad, that is of the light point 11d |
| Sps = $(x_{PS}, y_{PS})$ | the coordinates of the Rear Left Sensor Sps, that is of the light point 13s |
| Spd = $(X_{AD}, Y_{AD})$ | the coordinates of the Rear Right Sensor Spd, tha is of the light point 13d |

The following are also indicated with:

| | |
|---|---|
| $\alpha$ - | the Angle formed between the perpendicular to the Reference Bar 15 in the point Rsx and the infrared ray coming from the Front Left Sensor (Sas) |
| $\beta$ - | the angle formed between the perpendicular to the Reference Bar in the point Rsx and the infrared ray coming from the Rear Left Sensor (Sps) |
| y - | the angle formed between the perpendicular to the Reference Bar in the point Rdx and the infrared ray coming from the Front Right Sensor (Sad) |
| $\delta$ - | the angle formed between the perpendicular to the Reference Bar in the point Rdx and the infrared ray coming from the Rear Right Sensor (Spd) |
| L - | the distance from the front axle of the vehicle to the Reference Bar |
| P | the wheelbase of the vehicle |
| Ca | the front track |
| Cp | the rear track |
| Dsx | the difference in track on the left side of the vehicle |
| Ddx | the difference in track on the right side of the vehicle, therefore with |
| D = Dsx + Ddx | the total difference in track |

As the point Rsx is the origin of the Cartesian plane for the left side, therefore:

$$y_{AS} = \tan(\alpha)\, x_{AS}$$

$$\Rightarrow Y_{AS} = \tan(\alpha)\, L$$

$$X_{AS} = L$$

$$Y_{PS} = \tan(\beta)\, X_{PS}$$

$$\Rightarrow Y_{PS} = \tan(\beta)(L + P);$$

$$X_{PS} = L + P$$

consequently to obtain the Difference in Track of the left side (Dsx), bearing in mind that this measurement is positive when $Y_{AS} > Y_{PS}$, therefore:

$$Dsx = Y_{AS} - Y_{PS} = \tan(\alpha)\, L - \tan(\beta)(L + P)$$

and therefore

$$Dsx = \tan(\alpha)\, L - \tan(\beta)(L + P)$$

Analogously, as the point Rdx is the origin of the Cartesian plane for the right side and therefore:

$$Y_{AD} = \tan(y)\, X_{AD}$$

$$\Rightarrow Y_{AD} = \tan(y)\, L$$

$$X_{AD} = L$$

$$Y_{PD} = \tan(\delta)\, X_{PD}$$

$$\Rightarrow Y_{PD} = \tan(\delta)\, (L + P);$$

$$X_{PD} = L + P$$

consequently to obtain the Difference in Track of the right side (Ddx), bearing in mind that this measurement is positive when $Y_{AD} < Y_{PD}$, therefore:

$$Ddx = Y_{PD} - Y_{AD} = \tan(\delta)(L + P) - \tan(y)\, L$$

and therefore

$$Ddx = \tan(\delta)\, (L + P) - \tan(y)\, L$$

The difference in Track of the vehicle is obtained by adding the two differences of the single sides:

$$D = Dsx + Ddx = \tan(\alpha)\, L - \tan(\beta)(L+P) + \tan(\delta)\, (L+P) - \tan(y)L$$

$$D = L\,(\tan(\alpha) - \tan(y)) + (L + P)\,(\tan(\delta) - \tan(\beta)).$$

The calculation can be obtained with known means, as the data of the linear dimensions are known and those of the angles are obtainable with the two receivers 17s and 17d; all this is indicated in electrical measurements.
The operations are extremely simple as L is imposed with positioning of the vehicle, the wheelbase P a known characteristic datum of the vehicle unless differences of little influence, and the angular measurements being subsequently obtained by activating the light points 21 of the various wheels.
It is understood that the drawing merely shows an example provided purely as a practical embodiment of the invention, which may vary in forms and layout without however departing from the scope of the concept on which the invention is based. The presence of any reference numbers in the claims with reference to the description and to the drawing, does not limit the scope of the protection represented by the claims.

**Claims**

1.   Device to measure the differences in track between the front wheels and the rear wheels of vehicles, to then proceed to check toe-in, **characterized in that** it comprises: a bar (15) to be positioned at a limited distance in front of the vehicle and equipped with two optical receivers (17s, 17d) placed with a distance between them limitedly greater than the tracks of the vehicle, facing the right wheels and the left wheels respectively and with the optical axis orthogonal or in any case positioned in a know way with respect to the bar; and point light sources (21) positionable on each wheel and visible from said receivers (17s; 17d); said receivers being suitable to measure the angle according to which the point images reach the receivers.

2.   Device as claimed in claim 1, **characterized in that** each receiver (17s, 17d) comprises an optical focusing system (17B) and an optical system with a cylindrical lens (17C) to linearly concentrate the image of the point light sources (21) on the photosensitive range (17E) of the receiver.

3.   Device as claimed in claim 1 or 2, **characterized in that** the point light sources (21) are placed on the wheels at a fixed and known distance of said wheels.

4.   Device as claimed in at least claim 1, **characterized in that** the point light sources (21) are concentrated in the infrared range and **in that** a selector filter (17D) is provided in the optical receivers (17s; 17d).

5.   Device as claimed in at least one of the previous claims, **characterized in that** the point light sources (21) are produced with LEDs.

6.   Device to measure the differences in track between the front wheels and the rear wheels of vehicles; all as described above and represented by way of example in the accompanying drawing.

Fig.1

# Fig. 2

Fig.4

17 17C 17B

17D

17E

V V

17A

17E

17C

F

Do

X1

17B

17D

15

17D

17 17C

17D

X

21

Fig.3

Fig.5

EP 1 477 766 A1

8

**European Patent Office**

## EUROPEAN SEARCH REPORT

Application Number

EP 04 42 5325

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 219 134 B1 (VOELLER DAVID A ET AL) 17 April 2001 (2001-04-17) * column 5, line 4-55; figure 1 * --- | 1,3-6 | G01B11/275 |
| Y | US 6 323 776 B1 (JACKSON DAVID A ET AL) 27 November 2001 (2001-11-27) * column 4, line 59 - column 6, line 7; figure 1 * --- | 1,3-6 | |
| Y | EP 1 189 022 A (BAE SYSTEMS PLC) 20 March 2002 (2002-03-20) * paragraph [0013]; figure 1 * * paragraphs [0002],[0003] * --- | 1,3-6 | |
| Y | US 5 973 788 A (PETTERSEN ALF D ET AL) 26 October 1999 (1999-10-26) * column 4, line 14-32; figure 1 * * column 3, line 59-62 * ----- | 1,3-6 | |

| | TECHNICAL FIELDS SEARCHED (Int.Cl.7) |
|---|---|
| | G01B |

The present search report has been drawn up for all claims

| Place of search | Date of completion of the search | Examiner |
|---|---|---|
| MUNICH | 17 August 2004 | Beyfuß, M |

EPO FORM 1503 03.82 (P04C01)

**ANNEX TO THE EUROPEAN SEARCH REPORT
ON EUROPEAN PATENT APPLICATION NO.**                    EP 04 42 5325

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2004

| Patent document cited in search report | | | Publication date | Patent family member(s) | | Publication date |
|---|---|---|---|---|---|---|
| US 6219134 | B1 | | 17-04-2001 | NONE | | |
| US 6323776 | B1 | | 27-11-2001 | AU | 1817601 A | 03-07-2001 |
| | | | | CA | 2352188 A1 | 28-06-2001 |
| | | | | CN | 1340179 T | 13-03-2002 |
| | | | | EP | 1155384 A1 | 21-11-2001 |
| | | | | JP | 2003520947 T | 08-07-2003 |
| | | | | WO | 0146909 A1 | 28-06-2001 |
| EP 1189022 | A | | 20-03-2002 | EP | 1189022 A1 | 20-03-2002 |
| US 5973788 | A | | 26-10-1999 | NO | 954056 A | 14-04-1997 |
| | | | | AU | 7344796 A | 30-04-1997 |
| | | | | DE | 69619558 D1 | 04-04-2002 |
| | | | | DE | 69619558 T2 | 31-10-2002 |
| | | | | DE | 880674 T1 | 02-06-1999 |
| | | | | EP | 0880674 A1 | 02-12-1998 |
| | | | | JP | 11513495 T | 16-11-1999 |
| | | | | WO | 9714015 A1 | 17-04-1997 |
| | | | | US | 6166809 A | 26-12-2000 |

EPO FORM P0459

For more details about this annex : see Official Journal of the European Patent Office, No. 12/82